# EUROPÄISCHE PATENTSCHRIFT

(11) **EP 0 726 744 B1**
(45) Veröffentlichungstag und Bekanntmachung des Hinweises auf die Patenterteilung: **08.07.1998**
(21) Anmeldenummer: 94931567.5
(22) Anmeldetag: 05.11.1994
(51) Int. Cl.: A61C 17/06, B04B 5/12

(54) **ABTRENNEINHEIT UND SAUGEINHEIT FÜR DENTALE ZWECKE**
SEPARATOR UNIT AND SUCTION UNIT FOR DENTAL WORK
UNITE DE SEPARATION ET UNITE D'ASPIRATION A USAGE DENTAIRE

(30) Priorität: 12.11.1993 DE 4338718
(43) Veröffentlichungstag der Anmeldung: 21.08.1996
(73) Patentinhaber: Dürr-Dental GmbH & Co. KG, D-74321 Bietigheim-Bissingen (DE)
(72) Erfinder: ELLINGHAUS, Wolfgang, D-70839 Gerlingen (DE)
(74) Vertreter: Ostertag, Reinhard
(86) Internationale Anmeldenummer: EP9403636
(87) Internationale Veröffentlichungsnummer: WO9513030

(56) Entgegenhaltungen:
- EP-A- 0 400 431
- EP-A- 0 425 451
- EP-A- 0 557 251
- WO-A-89/04214
- DE-A- 4 121 934

## Beschreibung

Die Erfindung betrifft eine Abtrenneinheit zum Abtrennen von Luft aus dem an einem zahnärztlichen Arbeitsplatz anfallenden Gemisch aus Luft einerseits und Flüssigkeit sowie gegebenenfalls zusätzlich Feststoffpartikeln andererseits sowie eine dentale Saugeinheit, in welcher eine derartige Abtrenneinheit vorgesehen ist. Üblicherweise sind den Saugmaschinen von dentalen Arbeitsplätzen einlaßseitig zentrifugenartige Zyklone vorgeschaltet, um aus der angesaugten Luft Flüssigkeitsanteile zu entfernen. Der Abscheidegrad dieser Abtrenneinheiten muß gut sein, damit auch im Langzeitbetrieb keine Flüssigkeit zum Saugmaschine gelangt, wodurch letztere beschädigt werden würde.

Eine derartige Vorrichtung ist z. B. aus der DE 41 21 934 A1 bekannt. Diese umfaßt eine Zentrifuge mit einer Zentrifugentrommel, wobei im Bereich des unteren Endes der Zentrifugentrommel mehrere radiale Stege vorhanden sind, welche ein Trennrad bilden und mittels der Zentrifugalkraft vom Amalgam Wasser und Restluft trennen. Diese Vorrichtung baut aber in axialer Richtung verhältnismäßig groß und bedingt bestimmte Mindestgeschwindigkeiten der Luft. Für manche Anwendungsfälle wäre es nun angenehm, auch mit kleineren Luftdurchsätzen arbeiten zu können, ohne daß die Gefahr eines Durchschlagens von Flüssigkeit zur Saugmaschine besteht.

Durch die vorliegende Erfindung soll daher eine Abtrenneinheit gemäß dem Oberbegriff des Anspruches 1 so weitergebildet werden, daß auch bei geringen Strömungsgeschwindigkeiten der Luft eine gute Abscheidung von flüssigen Bestandteilen des angesaugten Gemisches gewährleistet ist.

Diese Aufgabe ist erfindungsgemäß gelöst durch eine Abtrenneinheit gemäß Anspruch 1.

Bei der erfindungsgemäßen Abtrenneinheit wird dem einströmenden Gemisch aus Luft und Flüssigkeit durch das Trennrad eine starke Kreisbewegung aufgeprägt, aufgrund welcher dann die Trennung in leichte und schwere Bestandteile erfolgt. Erfindungsgemäß ist hierzu das Trennrad so ausgebildet, daß einerseits eine starke und lang anhaltende Einwirkung von Zentrifugalkräften erhalten wird, andererseits eine zwangsweise Führung der Luft vom Einlaßstutzen zum ersten Auslaßstutzen auf einem gewundenen Weg und ein sicheres Abgeben der abgeschiedenen Flüssigkeit in den zweiten Auslaßstutzen gewährleistet ist.

Verblockt man gemäß Anspruch 22 eine derartige Abscheideeinheit mit einer Saugmaschine und setzt man das Trennrad mit auf die Welle der Saugmaschine, so erhält man diese gute Flüssigkeitsabtrennung unter mechanisch nur geringem Aufwand. Die gesamte Einheit aus Saugmaschine und Abtrenneinheit baut in axialer Richtung kurz. Sie ist auch einfach zu montieren.

Vorteilhafte Weiterbildungen der Erfindung sind in Unteransprüchen angegeben.

Gibt man den Beschleunigungsflügeln gemäß Anspruch 2 eine ebene in radialer Richtung verlaufende Gestalt, so hat man einen besonders niedrigen Strömungswiderstand der Abtrenneinheit für durchgesaugte Luft.

Die Weiterbildung der Erfindung gemäß Anspruch 3 ist im Hinblick auf ein besonders sicheres Austragen von abgeschiedenen flüssigen Bestandteilen und das Aufbauen eines höheren Druckes in der abgegebenen Flüssigkeit von Vorteil.

Die Weiterbildung der Erfindung gemäß Anspruch 4 ist im Hinblick auf das Unterbinden von Leckpfaden im Inneren des Gehäuses der Abtrenneinheit, die das Trennrad umgehen, von Vorteil.

Die Weiterbildung der Erfindung gemäß Anspruch 5 dient einer guten unbehinderten Abgabe der abgeschiedenen Flüssigkeitsanteile.

Bei einer Abtrenneinheit gemäß Anspruch 6 ist gewährleistet, daß etwa zusammen mit den flüssigen Anteilen abgeschiedene größere Feststoffpartikel nicht zwischen das Trennrad und das Gehäuse gelangen, vielmehr unter Schwerkrafteinwirkung vom Trennrad wegrollen.

Auch die Weiterbildung der Erfindung gemäß Anspruch 7 hat zum Zweck, ein Verklemmen fester abgeschiedener Partikel zwischen dem Gehäuse und dem Trennrad der Abtrenneinheit zu vermeiden.

Bei einer Abtrenneinheit gemäß Anspruch 8 wird das zu zerlegende Gemisch schon in unmittelbarer Nachbarschaft des Einlaßstutzens von den Beschleunigungsflügeln übernommen.

Die Weiterbildung der Erfindung gemäß Anspruch 9 ist im Hinblick auf günstiges Strömungsverhalten im Bereich des Einlaßstutzens und der Eintrittsöffnung des Trennrades von Vorteil.

Dem gleichen Zweck dient auch die Weiterbildung der Erfindung gemäß Anspruch 10.

Bei einer Abtrenneinheit gemäß Anspruch 11 sind wiederum die Leckwege, die im Inneren des Gehäuses der Abtrenneinheit um das Trennrad herumführen, stark gedrosselt.

Die Weiterbildung der Erfindung gemäß Anspruch 12 dient der Führung des Luftstromes auf einem von scharfen Kanten freien Weg vom Einlaßstutzen des Gehäuses bis zu dessen erstem Auslaßstutzen.

Bei einer Abtrenneinheit gemäß Anspruch 14 werden an der Außenseite der Trennwand laufende Flüssigkeitstropfen an der außenliegenden Umfangsrippe der Trennwand abgeschleudert und gelangen so kontrolliert zum Flüssigkeitsabgabespalt des Trennrades.

Die Weiterbildung der Erfindung gemäß Anspruch 15 ist im Hinblick auf ein Zurückfördern flüssiger Bestandteile von Vorteil, welche bei sehr ungünstigen Arbeitsbedingungen möglicherweise bis in die Nähe des Auslaßstutzens gelangt sind.

Die Weiterbildung der Erfindung gemäß Anspruch 16 ist im Hinblick auf ein weiches Umlenken des durch das Trennrad bewegten Luftstromes zum Auslaßstutzen hin vorteilhaft.

Die Weiterbildung der Erfindung gemäß Anspruch 17 dient einer weiteren Unterdrückung von Leckströmen durch dynamische Abdichtung.

Dabei wird mit der Weiterbildung der Erfindung gemäß Anspruch 18 eine nochmals verbesserte Leckstromunterdrückung erhalten.

Auch die Weiterbildung der Erfindung gemäß Anspruch 19 dient einem verbesserten Strömungsverhalten der durch die Abtrenneinheit hindurchgezogenen Luft.

Mit der Weiterbildung der Erfindung gemäß Anspruch 20 wird erreicht, daß die aus der Austrittsöffnung des Trennrades abströmende Luft am Eingang des Auslaßstutzens einen kleinen Wirbel bildet, der als dynamisches Gleitlager für die Hauptluftmenge dient.

Die Weiterbildung der Erfindung gemäß Anspruch 21 erlaubt die Herstellung des Trennrades aus wenigen Kunststoffspritzteilen oder metallischen Spritz- oder Gußteilen und damit zu günstigen Herstellungskosten.

Eine Saugeinheit, wie sie im Anspruch 22 angegeben ist, zeichnet sich durch kompakten Aufbau und geringe Herstellungskosten aus.

Dabei ist die Weiterbildung der Erfindung gemäß Anspruch 23 im Hinblick auf kleinen Strömungswiderstand der gesamten Saugeinheit von Vorteil, für die somit nur ein Antriebsmotor verhältnismäßig geringer Leistung bereitgestellt zu werden braucht.

Die Erfindung wird nachstehend anhand eines Ausführungsbeispieles unter Bezugnahme auf die Zeichnung näher erläutert. In dieser zeigen:
- Figur 1:: einen axialen Schnitt durch eine Abtrenneinheit zum Abtrennen von Flüssigkeit aus dem an einem dentalen Arbeitsplatz anfallenden Gemisch aus Flüssigkeit und Luft; und
- Figur 2:: einen axialen Schnitt durch eine Saugmaschine, deren Einlaß an den Auslaß der in Figur 1 gezeigten Abtrenneinheit angeschlossen ist.

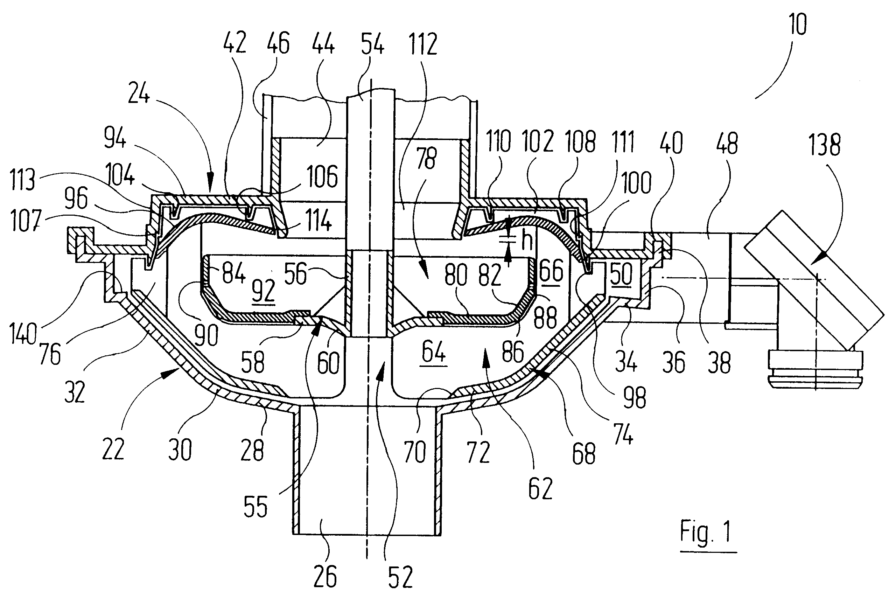

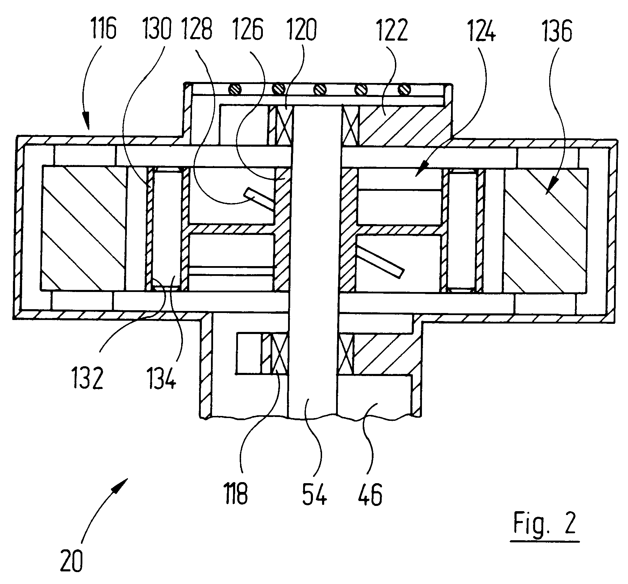

In Figur 1 ist mit 10 insgesamt eine Abtrenneinheit bezeichnet, die zusammen mit einer in Figur 2 wiedergegebenen, dort insgesamt mit 20 bezeichneten Saugmaschine eine Saugeinheit für eine zahnärztliche Praxis bildet.

Die Abtrenneinheit 10 hat ein Gehäuse, welches aus einem unteren Gehäuseteil 22 und einem oberen Gehäuseteil 24 besteht.

Das untere Gehäuseteil 24 hat einen nach unten weisenden Einlaßstutzen 26, der bei betriebsbereiter Abtrenneinheit mit der Ablage eines dentalen Arbeitsplatzes verbunden ist, an welchen dann eine Saugkanüle, ein Speichelheber und andere Unterdruckverbraucher des Arbeitsplatzes angeschlossen sind.

An den Einlaßstutzen 26 schließt sich ein erster, unter einem Winkel von etwa 78° zur Stutzenachse geneigter erster kegelförmiger Wandabschnitt 28 an, auf welchen über einen gekrümmten Wandabschnitt 30 ein zweiter kegelförmiger Wandabschnitt 32 folgt, dessen Mantellinien mit der Stutzenachse einen Winkel von etwa 45° einschließen.

An den Wandabschnitt 32 schließt sich ein nach unten abfallender Wandabschnitt 34 an, dessen radial außenliegender Rand einen spiraligen in Umfangsrichtung verlaufenden Wandabschnitt 36 trägt. Ein letzter gekröpfter Wandabschnitt 38 arbeitet mit einem am Rand des oberen Gehäuseteiles 24 vorgesehenen gefalzten Wandabschnitt 40 zusammen, um die beiden Gehäuseteile 22, 24 dicht zu verbinden.

Darüber hinaus hat das obere Gehäuseteil 24 einen im wesentlichen zylindrischen, nach oben hochgezogenen Wandabschnitt 42, der einen ersten Auslaßstutzen 44 trägt. Dieser ist mit einem Einlaßstutzen 46 der Saugmaschine 20 verbunden. Ein zweiter Auslaßstutzen 48 steht mit einem durch die Wandabschnitte 36, 38 an dessen breitester Stelle vorgegebenen Auslaßkanal 50 in Verbindung.

In dem durch die beiden Gehäuseteile 22, 24 begrenzten Raum ist ein insgesamt mit 52 bezeichnetes Trennrad unter kleinem Spiel drehbar angeordnet. Das Trennrad 52 sitzt auf einer Antriebswelle 54, die der Abtrenneinheit 10 und der Saugmaschine gemeinsam ist.

Das Trennrad 52 ist ein aus drei Spritzteilen zusammengesetztes Bauteil.

Zu einem ersten Spritzteil 55 gehört ein Nabenabschnitt 56, der mit der Antriebswelle 54 verbunden ist und einen im wesentlichen transversalen Trennwandabschnitt 58 trägt, der in der Nachbarschaft des Nabenabschnittes 56 kegelig in Richtung zum Einlaßstutzen 26 angestellt ist, wie bei 60 angedeutet. Zu dem ersten Spritzteil 55 gehören ferner Beschleunigungsflügel 62, die im wesentlichen die Form einer unter 90° abgewinkelten Karotte haben. Der im wesentlichen transversale Abschnitt des Flügels ist in der Zeichnung mit 64, der im wesentlichen axiale Flügelabschnitt mit 66 bezeichnet.

Die in Figur 1 untenliegende Randkante der Beschleunigungsflügel 62 trägt radial außerhalb des Randes des Trennwandabschnittes 58 liegend eine Stirnplatte 68, die eine zum Rand des Einlaßstutzens 26 hin geneigt verlaufende mittige Eintrittsöffnung 70 des Trennrades 52 vorgibt. Die Stirnplatte 68 hat wie das untere Gehäuseteil 22 einen unter etwa 78° zur Trennradachse angestellten ersten Stirnplattenabschnitt 72 sowie einen unter etwa 45° zur Trennradachse angestellten zweiten kegelförmigen Stirnplattenabschnitt 74.

An den Rand der Stirnplatte 68 sind noch Austragflügel 76 angeformt, die in Umfangsrichtung verteilt zwischen aufeinanderfolgenden Beschleunigungsflügeln 62 vorgesehen sind. Die radial außenliegenden Abschnitte der Beschleunigungsflügel 62 haben gleiche Geometrie wie die Austragflügel 76.

Auf den Trennwandabschnitt 58 ist ein schalenförmiges zweites Spritzteil 78 aufgesetzt, dessen Bodenwand 80 eine Fortsetzung des Trennwandabschnittes 58 darstellt und über eine kegeligen Wandabschnitt 82 in einen zylindrischen Wandabschnitt 84 übergeht. An den beiden Enden des kegeligen Wandabschnittes 82 sind auf der Außenseite des Spritzteiles 78 in Umfangsrichtung verlaufende Abtropfrippen 86, 88 vorgesehen. Beim unteren Ende des Wandabschnittes 84 sind Durchbrechungen 90 angebracht. Im Inneren des Spritzteiles 78 sind in radialer Richtung verlaufende Flügel 92 vorgesehen.

Wie aus Figur 1 ersichtlich, folgt die Unterseite des Spritzteiles 78 im wesentlichen der Kontur der oberen Kante der Beschleunigungsflügel 62 und begrenzt mit der Oberseite der Stirnplatte 68 zusammen einen gewundenen Ringkanal, dessen Querschnitt vom Einlaßstutzen 26 ausgehend zunächst bis zur Abtropfrippe 86 hin abnimmt und sich von dort aus dann wieder erweitert, wobei zugleich die Achse des Durchströmquerschnittes zunehmend in axiale Richtung umgelegt wird.

Die in Figur 1 obenliegende Enden der Flügelabschnitte 66 tragen ein drittes Spritzteil 94, welches eine vom Inneren des Trennrades gesehen konkav gekrümmte zweite Stirnplatte 96 vorgibt. Der Rand der Stirnplatte 96 ist radial zum Rand der Stirnplatte 68 nach innen versetzt, so daß der obere Abschnitt der Austragflügel 76 und der entsprechende Endabschnitt der Beschleunigungsflügel 62 nach oben frei ist. In diesem Abschnitt der Austragflügel 76 und der Beschleunigungsflügel 62 sind Kerben 98 vorgesehen, die unter geringem Spiel über eine nach unten hängende Rippe 100 des oberen Gehäuseteiles 24 laufen.

Ähnlich sind in radialen Flügeln 102, die von der Oberseite der Stirnplatte 96 nach oben überstehen, Kerben 104, 106 vorgesehen, die unter kleinem Spiel mit Rippen 108, 110 zusammenarbeiten, die vom Boden des Wandabschnittes 42 nach unten vorstehen. Auf diese Weise erhält man eine dynamische und Labyrinth-Abdichtung zwischen der Oberseite des Trennrades 52 und dem oberen Gehäuseteil 24.

In den im wesentlichen vertikalen Randkanten der radialen Flügel 102 sind weitere Kerben 107 vorgesehen, die mit einer umlaufenden Rippe 111 ebenfalls eine Labyrinth-Abdichtung bilden, welche am Umfang des dritten Spritzteiles 94 wirksam ist. Die Rippe 111 ist von einem im wesentlichen achsparallelen, vertikalen Wandabschnitt 113 getragen, der den Wandabschnitt 42 begrenzt und im wesentlichen mit der Rippe 100 fluchtet.

Wie aus Figur 1 ersichtlich, hat die Stirnplatte 96 die Form einer konkav gekrümmten Rinne, welche am äußeren Ende den im wesentlichen schon in axialer Richtung zwischen dem Spritzteil 78 und der Stirnplatte 68 austretenden Luftstrom auffängt, über den Rand des zweiten Spritzteiles 78 führt und dann in unmittelbarer Nähe des ersten Auslaßstutzens 44 abgibt.

Wie aus Figur 1 ersichtlich, hat der Auslaßstutzen 44 einen sich kegelförmig verjüngenden Endabschnitt 112, der um eine kleine Strecke h unter eine durch den inneren Rand des Spritzteiles 94 vorgegebene Trennrad-Austrittsöffnung 114 heruntergezogen ist. Durch die kleine außen am Endabschnitt 112 anstoßende Luftmenge wird somit ein torusförmiger kleiner Wirbel erzeugt, der als dynamisches Gleitlager für die Hauptmenge der durch die Abtrenneinheit 10 gesaugte Luft dient und deren Umlenkung in den Auslaßstutzen 44 hinein unterstützt.

Wie aus Figur 2 ersichtlich, hat die Saugmaschine 20 ein insgesamt mit 116 bezeichnetes Gehäuse, welches in der Praxis aus mehreren Gehäusesegmenten bestehen kann, deren Trennflächen in geeigneter Weise gewählt sind. Ein oberer Abschnitt der Antriebswelle 54 ist in axial beabstandeten Lagern 118, 120 gelagert, die ihrerseits jeweils über drei in Umfangsrichtung verteilte Arme 122 am Gehäuse 116 befestigt sind.

Ein insgesamt mit 124 bezeichneter Rotor ist im wesentlichen ein Aluminiumgußteil mit einem mit der Antriebswelle 54 verbundenen Nabenabschnitt 126 und einem über Lüfterschaufeln 128 von letzteren getragenen Umfangsabschnitt 130. Letzterer hat axiale Ausnehmungen 132, in welche Permanentmagnete 134 eingesetzt sind. Diese arbeiten mit einem Drehfeld zusammen, welches durch einen schematisch angedeuteten Stator 136 erzeugt wird.

Die in der Zeichnung wiedergegebene Saugeinheit arbeitet folgendermaßen:

Die Saugmaschine 20 saugt vom Arbeitsplatz her das dort anfallende Gemisch aus Flüssigkeit und Luft an, welches so den Einlaßstutzen 26 erreicht. Durch das auf der Antriebswelle 54 sitzende Trennrad 52 wird das angesaugte Gemisch in rasche Drehbewegung versetzt, wodurch eine Trennung zwischen leichten und schweren Bestandteilen erhalten wird. Die Flüssigkeit und etwa im angesaugten Gemisch enthaltene feste Bestandteile werden vom Trennrad 52 in den Auslaßkanal 50 und den mit diesem in Verbindung stehenden zweiten Auslaßstutzen 48 gedrückt. Dabei ist der in der Flüssigkeit aufgebaute Druck so groß, daß hierdurch ein Eckventil 138 geöffnet werden kann, über welches der zweite Auslaßstutzen 48 mit einer unter atmosphärischem Druck stehenden Abwasserleitung verbindbar ist.

Die leichten Luftanteile des angesaugten Gemisches strömen dagegen über die Außenseite des zweiten Spritzteiles 78 und die Innenfläche des konkaven dritten Spritzteiles 94 zum ersten Auslaßstutzen 44 und von dort durch den Rotor 124 der Saugmaschine 20 zur Umgebungsatmosphäre.

Durch die Abtrenneinheit 10 ist dabei gewährleistet, daß Flüssigkeitsanteile des angesaugten Gemisches zuverlässig von der Saugmaschine 20 ferngehalten werden.

Soweit sich in der abgeschiedenen Flüssigkeit größere Festkörperpartikel befinden, bewegen sich diese auf dem geneigten Wandabschnitt 34 radial nach außen, also vom Trennrad 52 weg. Eine auf der Innenseite des Wandabschnittes 34 zusätzlich vorgesehene in Umfangsrichtung verlaufende Nase 140 verkleinert lokal den Zwischenraum zwischen dem Trennrad 52 und dem unteren Gehäuseteil 22 nochmals, sodaß keine größeren Feststoffpartikel zwischen die Unterseite des Trennrades 52 und das Gehäusteil 22 eintreten können und an der Nase 140 etwa vorbeikommende Festkörperpartikel dann ohne Verklemmen wieder zum Einlaßstutzen 26 zurückfinden.

Wie aus der Zeichnung und der obenstehenden Beschreibung ersichtlich, baut die gesamte Saugeinheit axial kurz und hat mechanisch einfachen Aufbau. Der Abscheidegrad der Abtrenneinheit 10 hängt nicht von der durch sie hindurchgesaugten Luftmenge und deren Strömungsgeschwindigkeit ab, ist vielmehr durch die Drehzahl der Antriebswelle 54 vorgegeben.

Die wesentlichen Merkmale der oben beschriebenen Abtrenneinheit lassen sich wie folgt zusammenfassen:

Eine Abtrenneinheit zum Abtrennen von Flüssigkeit aus dem an einem zentralen Arbeitsplatz anfallenden Gemisch aus Luft und Flüssigkeit umfaßt ein in einem Gehäuse umlaufendes Trennrad 52 mit radialen Beschleunigungsflügeln 66. Zwei Stirnplatten 68, 96 und eine mittlere Trennwand 58, 78 begrenzen einen gewundenen Durchströmweg für Luft vom Einlaßstutzen 26 zu einem ersten Auslaßstutzen 44 des Gehäuses. Die beiden Stirnplatten 68, 96 geben ferner einen Flüssigkeitsabgabespalt vor, der mit einem zweiten Auslaßstutzen 48 des Gehäuses in Verbindung steht. Auf diese Weise werden Flüssigkeitsanteile des angesaugten Gemisches durch Zentrifugalkraft zuverlässig auch dann abgetrennt, wenn nur geringe Luftmengen durch die Abtrenneinheit hindurchgezogen werden.

Die Führung der Luft im Inneren der Abscheideeinheit erfolgt mit einer ersten Umlenkung vom etwa +90°, einer zweiten Umlenkung von etwa -180° und einer dritten Umlenkung von etwa +90°.

## Patentansprüche

1. Abtrenneinheit zum Abtrennen von Flüssigkeit aus dem an einem dentalen Arbeitsplatz anfallenden Gemisch aus Luft einerseits und Flüssigkeit sowie gegebenenfalls zusätzlich Feststoffpartikeln andererseits, mit einem Gehäuse (22, 24), welches einen Einlaßstutzen (26) für das zu zerlegende Gemisch und einen ersten Auslaßstutzen (44) für Luft sowie einen zweiten Auslaßstutzen (48) für Flüssigkeit und gegebenenfalls feste Gemischanteile aufweist, und mit Mitteln zum in rasche Drehung Versetzen des zugeführten Gemisches, welche ein Trennrad (52) aufweisen, dadurch gekennzeichnet, daß das Trennrad (52) einlaßseitig eine erste Stirnplatte (68) hat, die im wesentlichen kegelstumpfförmig ist und eine dem Einlaßstutzen (26) benachbarte Eintrittsöffnung (70) vorgibt, eine Trennwand (58, 78) aufweist, durch welche eine direkte Strömungsverbindung zwischen dem Einlaßstutzen (26) und dem ersten Auslaßstutzen (44) unterbrochen ist, und welches eine auslaßseitige, zweite Stirnplatte (96) aufweist, die eine dem ersten Auslaßstutzen (44) benachbarte Austrittsöffnung (114) vorgibt, wobei die Ränder der beiden Stirnplatten (68, 96) einen radial außen-liegenden Flüssigkeitsabgabespalt des Trennrades (52) begrenzen; daß zumindest in einem Teil des zwischen der ersten Stirnplatte (68) und der Trennwand (58, 78) liegenden Raumes Beschleunigungsflügel (62) mit radialer Erstreckungskomponente vorgesehen sind; und daß Einlaßstutzen (26) und erster Auslaßstutzen (44) des Gehäuses (22, 24) koaxial angeordnet sind.

2. Abtrenneinheit nach Anspruch 1, dadurch gekennzeichnet, daß die Beschleunigungsflügel (62) in axialer Richtung gesehen in radialen Ebenen verlaufen.

3. Abtrenneinheit nach Anspruch 1 oder 2, dadurch gekennzeichnet, daß im Flüssigkeitsabgabespalt des Trennrades (52) Austragflügel (66, 76) angeordnet sind.

4. Abtrenneinheit nach Anspruch 3, dadurch gekennzeichnet, daß der Rand der zweiten Stirnplatte (96) radial zum Rand der ersten Stirnplatte (68) nach innen versetzt ist und daß in den freien auslaßseitigen Rändern der Austragflügel (66, 76) Kerben (98) vorgesehen sind, die unter kleinem Spiel über einer von einer auslaßseitigen Endwand (42) des Gehäuses (22, 24) getragenen Rippe (100) laufen.

5. Abtrenneinheit nach einem der Ansprüche 1-4, dadurch gekennzeichnet, daß das Gehäuse (22, 24) einen den Flüssigkeitsabgabespalt des Trennrades (52) umgebenden, sich in Drehrichtung erweiternden Auslaßkanal (50) begrenzt, dessen breitester Abschnitt mit dem zweiten Auslaßstutzen (48) in Verbindung steht.

6. Abtrenneinheit nach Anspruch 5 zum Betrieb mit vertikaler Ausrichtung der Trennradachse, dadurch gekennzeichnet, daß eine Bodenwand (34) des Auslaßkanales (50) in radialer Auswärtsrichtung schräg nach unten abfällt.

7. Abtrenneinheit nach Anspruch 5 oder 6, dadurch gekennzeichnet, daß der der ersten Stirnplatte (68) zugewandte Rand des Auslaßkanales (50) eine in Umfangsrichtung zum freien Rand der ersten Stirnplatte (68) vorspringende und unter kleinem Abstand vor dieser liegende Rippe (140) trägt.

8. Abtrenneinheit nach einem der Ansprüche 1-7, dadurch gekennzeichnet, daß die Beschleunigungsflügel (62) sich über den Rand der Eintrittsöffnung (70) radial nach innen zur Achse des Trennrades (52) hin erstrecken.

9. Abtrenneinheit nach einem der Ansprüche 1-8, dadurch gekennzeichnet, daß die erste Stirnplatte (68) einen stärker zur Trennradachse geneigten einlaßseitigen Stirnplattenabschnitt (72) und einen sich hieran anschließenden, schwächer zur Trennradachse geneigten Stirnplattenabschnitt (74) aufweist.

10. Abtrenneinheit nach Anspruch 9, dadurch gekennzeichnet, daß die Eintrittsöffnung (70) eine zum Einlaßstutzen (26) hin geneigte Wandfläche hat.

11. Abtrenneinheit nach einem der Ansprüche 1-10, dadurch gekennzeichnet, daß eine den Einlaßstutzen (26) tragende einlaßseitige Endwand (28-32) der ihr gegenüberliegenden Oberfläche der ersten Stirnplatte (68) des Trennrades (52) unter kleinem Abstand folgt.

12. Abtrenneinheit nach einem der Ansprüche 1-11, dadurch gekennzeichnet, daß die Trennwand (58, 78) die Form einer zum ersten Auslaßstutzen (44) hin offenen Schale hat.

13. Abtrenneinheit nach Anspruch 12, dadurch gekennzeichnet, daß ein im wesentlichen achsparalleler randseitiger Wandabschnitt (84) der Trennwand (58, 78) mit Durchbrechungen (90) versehen ist.

14. Abtrenneinheit nach Anspruch 13, dadurch gekennzeichnet, daß die Trennwand (58, 78) auf ihrer der ersten Stirnplatte (68) zugewandten Oberfläche mit mindestens einer außenliegenden Umfangsrippe (86, 88) versehen ist.

15. Abtrenneinheit nach einem der Ansprüche 1-14, dadurch gekennzeichnet, daß die Trennwand (58, 78) auf ihrer dem ersten Auslaßstutzen (44) zugewandten Seite mit eine radiale Erstreckungskomponente aufweisenden Förderflügeln (92) versehen ist.

16. Abtrenneinheit nach einem der Ansprüche 1-15, dadurch gekennzeichnet, daß die zweite Stirnplatte (96) eine vom Inneren des Trennrades (52) her gesehen konkave Rinne bildet.

17. Abtrenneinheit nach einem der Ansprüche 1-16, dadurch gekennzeichnet, daß die dem Gehäuse (22, 24) zugewandte Seite der zweiten Stirnplatte (96) Flügel (102) mit radialer Erstreckungskomponente trägt.

18. Abtrenneinheit nach Anspruch 17, dadurch gekennzeichnet, daß die von der zweiten Stirnplatte (96) getragenen Flügel (102) mindestens eine Kerbe (104, 106, 107) aufweisen, welche unter kleinem Spiel über einer von der gegenüberliegenden Endwand des Gehäuses (22, 24) getragenen Rippe (108, 110, 111) laufen.

19. Abtrenneinheit nach einem der Ansprüche 1-18, dadurch gekennzeichnet, daß der erste Auslaßstutzen (44) einen sich kegelförmig in Richtung von der Trennwand (58, 78) weg erweiternden kegelstumpfförmigen Wandabschnitt (112) aufweist.

20. Abtrenneinheit nach einem der Ansprüche 1-19, dadurch gekennzeichnet, daß der dem Trennrad (52) benachbarte Rand des ersten Auslaßstutzens (44) axial geringfügig über den benachbarten Rand der durch die zweite Stirnplatte (96) begrenzten Austrittsöffnung (114) des Trennrades (52) übersteht (h).

21. Abtrenneinheit nach einem der Ansprüche 1-20, dadurch gekennzeichnet, daß die erste Stirnplatte (68), die Beschleunigungsflügel (62) und ein axial mit der Eintrittsöffnung (70) des Trennrades (52) fluchtender Abschnitt (58) der Trennwand (58, 78) sowie ein Nabenabschnitt (56) des Trennrades (52) durch ein einstückiges erstes Spritzteil (55) gebildet sind und der Rest der Trennwand (58, 78) und die zweite Stirnplatte (96) durch ein gesondertes zweites (78) und drittes (94) Spritzteil gebildet sind, wobei die drei Spritzteile (55, 78, 94) miteinander verrastet oder bleibend miteinander verbunden sind, z. B. durch Verkleben oder Verschweißen.

22. Saugeinheit für einen dentalen Arbeitsplatz mit einer Abtrenneinheit zum Abtrennen von Flüssigkeit aus dem an dem Arbeitsplatz anfallenden Gemisch aus Luft einerseits und Flüssigkeit sowie gegebenenfalls zusätzlich Feststoffpartikeln andererseits und mit einer Saugmaschine, die an den Luftauslaß der Abtrenneinheit angeschlossen ist, dadurch gekennzeichnet, daß die Abtrenneinheit eine Abtrenneinheit (10) gemäß einem der Ansprüche 1-21 ist und daß die Saugmaschine (20) ein Axialgebläse umfaßt, insbesondere ein Staubsaugergebläse.

23. Saugeinheit nach Anspruch 22, dadurch gekennzeichnet, daß das Gebläserad (128) der Saugmaschine (20) im Rotor (124) des Antriebsmotors (124, 136) ausgebildet ist.

## Claims

1. Separator unit for separating liquid from the mixture consisting on the one hand of air and on the other of liquid and possibly also solid particles which is produced at a dental operating position, with a housing (22, 24), which comprises an inlet connection (26) for the mixture to be decomposed and a first outlet connection (44) for air as well as a second outlet connection (48) for liquid and possibly solid mixture constituents, and with means for imparting a rapid rotary motion to the supplied mixture, which means comprise a separator wheel (52), characterised in that the separator wheel (52) has a first front plate (68) on the inlet side which is substantially frustoconical and determines an intake opening (70) adjacent to the inlet connection (26), comprises a partition (58, 78), by means of which a direct flow communication between the inlet connection (26) and the first outlet connection (44) is interrupted, and a second front plate (96) on the outlet side which determines an exit opening (114) adjacent to the first outlet connection (44), wherein the edges of the two front plates (68, 96) define a radially external liquid delivery gap of the separator wheel (52); that acceleration vanes (62) with a radial extension component are provided at least in a part of the space lying between the first front plate (68) and the partition (58, 78); and that the inlet connection (26) and the first outlet connection (44) of the housing (22, 24) are disposed coaxially.

2. Separator unit according to claim 1, characterised in that the acceleration vanes (62) extend in radial planes when viewed in the axial direction.

3. Separator unit according to claim 1 or 2, characterised in that discharge vanes (66, 76) are disposed in the liquid delivery gap of the separator wheel (52).

4. Separator unit according to claim 3, characterised in that the edge of the second front plate (96) is staggered radially inwards with respect to the edge of the first front plate (68), and that notches (98) are provided in the free edges, on the outlet side, of the discharge vanes (66, 76) and extend over a rib (100) borne by an end wall (42), on the outlet side, of the housing (22, 24).

5. Separator unit according to one of claims 1-4, characterised in that the housing (22, 24) defines an outlet passage (50) which surrounds the liquid delivery gap of the separator wheel (52), widens in the direction of rotation and the widest section of which communicates with the second outlet connection (48).

6. Separator unit according to claim 5 for operation with the separator wheel axis oriented vertically, characterised in that a bottom wall (34) of the outlet passage (50) slopes downwards so as to extend radially outwards.

7. Separator unit according to claim 5 or 6, characterised in that the edge of the outlet passage (50) which faces the first front plate (68) bears a rib (140) which projects in the circumferential direction towards the free edge of the first front plate (68) and lies at a small distance before the latter.

8. Separator unit according to one of claims 1-7, characterised in that the acceleration vanes (62) extend radially inwards over the edge of the intake opening (70) towards the axis of the separator wheel (52).

9. Separator unit according to one of claims 1-8, characterised in that the first front plate (68) comprises a front plate section (72) on the inlet side which is significantly inclined with respect to the separator wheel axis and an adjoining front plate section (74) which is inclined to a lesser degree with respect to the separator wheel axis.

10. Separator unit according to claim 9, characterised in that the intake opening (70) has a wall face which is inclined towards the inlet connection (26).

11. Separator unit according to one of claims 1-10, characterised in that an end wall (28-32) on the inlet side which bears the inlet connection (26) follows the surface of the first front plate (68) of the separator wheel (52) which lies opposite it at a small distance.

12. Separator unit according to one of claims 1-11, characterised in that the partition (58, 78) is in the form of a shell which is open towards the first outlet connection (44).

13. Separator unit according to claim 12, characterised in that a substantially paraxial edge wall section (84) of the partition (58, 78) is provided with apertures (90).

14. Separator unit according to claim 13, characterised in that the partition (58, 78) is provided on its surface which faces the first front plate (68) with at least one external circumferential rib (86, 88).

15. Separator unit according to one of claims 1-14, characterised in that the partition (58, 78) is provided on its side which faces the first outlet connection (44) with feed vanes (92) comprising a radial extension component.

16. Separator unit according to one of claims 1-15, characterised in that the second front plate (96) forms a trough which is concave when viewed from the inside of the separator wheel (52).

17. Separator unit according to one of claims 1-16, characterised in that the side of the second front plate (96) which faces the housing (22, 24) bears vanes (102) with a radial extension component.

18. Separator unit according to claim 17, characterised in that the vanes (102) borne by the second front plate (96) comprise at least one notch (104, 106, 107) extending with a small clearance over a rib (108, 110, 111) borne by the opposite end wall of the housing (22, 24).

19. Separator unit according to one of claims 1-18, characterised in that the first outlet connection (44) comprises a frustoconical wall section (112) widening conically away from the partition (58, 78).

20. Separator unit according to one of claims 1-19, characterised in that the edge of the first outlet connection (44) which is adjacent to the separator wheel (52) protrudes (h) slightly beyond the adjacent edge of the exit opening (114), which is defined by the second front plate (96), of the separator wheel (52).

21. Separator unit according to one of claims 1-20, characterised in that the first front plate (68), the acceleration vanes (62) and a section (58) of the partition (58, 78) which is axially aligned with the intake opening (70) of the separator wheel (52), as well as a hub section (56) of the separator wheel (52) are formed by a one-piece, first injection moulded part (55), and the remainder of the partition (58, 78) and the second front plate (96) are formed by a separate, second (78) and third (94) injection moulded part, wherein the three injection moulded parts (55, 78, 94) are interlocked or permanently connected together, e.g. by bonding or welding.

22. Suction unit for a dental operating position with a separator unit for separating liquid from the mixture consisting on the one hand of air and on the other of liquid and possibly also solid particles which is produced at the operating position, and with a suction machine which is connected to the air outlet of the separator unit, characterised in that the separator unit is a separator unit (10) according to one of claims 1-21, and that the suction machine (20) comprises an axial blower, in particular a dust aspirator.

23. Suction unit according to claim 22, characterised in that the impeller (128) of the suction machine (20) is formed in the rotor (124) of the drive motor (124, 136).

## Revendications

1. Unité de séparation pour séparer le liquide du mélange, produit en un poste de travail dentaire, d'air d'une part et de liquide ainsi qu'éventuellement en outre de particules de matières solides d'autre part, avec un boîtier (22, 24), qui présente une tubulure d'admission (26) pour le mélange à décomposer et une première tubulure d'évacuation (44) pour l'air, ainsi qu'une deuxième tubulure d'évacuation (48) pour le liquide et d'éventuelles parties solides du mélange, et avec des moyens qui sont destinés à mettre en rotation rapide le mélange apporté et qui présentent une roue séparatrice (52), **caractérisée** en ce que la roue séparatrice (52) possède du côté admission une première plaque frontale (68), qui est de forme essentiellement tronconique, qui prédéfinit une ouverture d'entrée (70) voisine de la tubulure d'admission (26) et qui présente une cloison séparatrice (58, 78), laquelle interrompt une liaison fluidique directe entre la tubulure d'admission (26) et la première tubulure d'évacuation (44), et ladite roue séparatrice (52) présentant, du côté d'évacuation, une deuxième plaque frontale (96) qui prédéfinit une ouverture de sortie (114) voisine de la première tubulure d'évacuation (44), les bords des deux plaques frontales (68, 96) délimitant une fente de délivrance de liquide de la roue séparatrice (52) qui est située radialement à l'extérieur ; en ce que des pales accélératrices (62) présentant une composante de développement radiale sont prévues au moins dans une partie de l'espace situé entre la première plaque frontale (68) et la cloison séparatrice (58, 78) ; et en ce que la tubulure d'admission (26) et la première tubulure d'évacuation (44) du boîtier (22, 24) sont disposées coaxialement.

2. Unité de séparation selon la revendication 1, **caractérisée** en ce que les pales accélératrices (62) s'étendent, vues en direction axiale, dans des plans radiaux.

3. Unité de séparation selon la revendication 1 ou 2, **caractérisée** en ce que des pales distributrices (66, 76) sont disposées dans la fente de délivrance de liquide de la roue séparatrice (52).

4. Unité de séparation selon la revendication 3, **caractérisée** en ce que le bord de la deuxième plaque frontale (96) est décalé radialement vers l'intérieur par rapport au bord de la première plaque frontale (68), et en ce que des encoches (98) sont prévues dans les bords libres, côté évacuation, des pales distributrices (66, 76), bords qui s'étendent sous un faible jeu au-dessus d'une nervure (100) portée par une paroi terminale (42), côté évacuation, du boîtier (22, 24).

5. Unité de séparation selon une des revendications 1 à 4, **caractérisée** en ce que le boîtier (22, 24) délimite un canal d'évacuation (50) entourant la fente de délivrance de liquide de la roue séparatrice (52) et s'élargissant dans la direction de rotation, canal dont la partie la plus large communique avec la deuxième tubulure d'évacuation (48).

6. Unité de séparation selon la revendication 5, pour un fonctionnement avec une orientation verticale de l'axe de la roue séparatrice, **caractérisée** en ce qu'une paroi de fond (34) du canal d'évacuation (50) descend, radialement vers l'extérieur, en pente oblique vers le bas.

7. Unité de séparation selon la revendication 5 ou 6, **caractérisée** en ce que le bord du canal d'évacuation (50) qui est tourné vers la première plaque frontale (68) porte une nervure (140) qui dépasse en direction circonférentielle vers le bord libre de la première plaque frontale (68) et se trouve à une petite distance devant cette dernière.

8. Unité de séparation selon une des revendications 1 à 7, **caractérisée** en ce que les pales accélératrices (62) s'étendent, au-dessus du bord de l'ouverture d'entrée (70), radialement vers l'intérieur en direction de l'axe de la roue séparatrice (52).

9. Unité de séparation selon une des revendications 1 à 8, **caractérisée** en ce que la première plaque frontale (68) présente une partie de plaque frontale (72) située du côté d'admission et plus fortement inclinée vers l'axe de la roue séparatrice, à laquelle se raccorde une partie de plaque frontale (74) plus faiblement inclinée vers l'axe de la roue séparatrice.

10. Unité de séparation selon la revendication 9, **caractérisée** en ce que l'ouverture d'entrée (70) présente une face de paroi inclinée vers la tubulure d'admission (26).

11. Unité de séparation selon une des revendications 1 à 10, **caractérisée** en ce qu'une paroi terminale (28-32), côté admission, portant la tubulure d'admission (26), suit à une faible distance la surface, qui lui fait face, de la première plaque frontale (68) de la roue séparatrice (52).

12. Unité de séparation selon une des revendications 1 à 11, **caractérisée** en ce que la cloison séparatrice (58, 78) a la forme d'une coque ouverte vers la première tubulure d'évacuation (44).

13. Unité de séparation selon la revendication 12, **caractérisée** en ce qu'une partie (84) de la cloison séparatrice (58, 78), qui est située du côté du bord essentiellement en parallélisme axial, est pourvue de brèches (90).

14. Unité de séparation selon la revendication 13, **caractérisée** en ce que la cloison séparatrice (58, 78) est pourvue, sur sa surface tournée vers la première plaque frontale (68), d'au moins une nervure circonférentielle (86, 88) située à l'extérieur.

15. Unité de séparation selon une des revendications 1 à 14, **caractérisée** en ce que la cloison séparatrice (58, 78) est pourvue, sur son côté tourné vers la première tubulure d'évacuation (44), de pales de refoulement (92) présentant une composante de développement radiale.

16. Unité de séparation selon une des revendications 1 à 15, **caractérisée** en ce que la deuxième plaque frontale (96) forme une rigole concave, vue de l'intérieur de la roue séparatrice (52).

17. Unité de séparation selon une des revendications 1 à 16, **caractérisée** en ce que le côté de la deuxième plaque frontale (96) qui est tourné vers le boîtier (22, 24) porte des pales (102) présentant une composante de développement radiale.

18. Unité de séparation selon la revendication 17, **caractérisée** en ce que les pales (102) portées par la deuxième plaque frontale (96) présentent au moins une encoche (104, 106, 107), ces encoches s'étendant sous un faible jeu au-dessus d'une nervure (108, 110, 111) portée par la paroi terminale opposée du boîtier (22, 24).

19. Unité de séparation selon une des revendications 1 à 18, **caractérisée** en ce que la première tubulure d'évacuation (44) présente une partie de paroi (112) de forme tronconique, qui s'élargit coniquement en éloignement de la cloison séparatrice (58, 78).

20. Unité de séparation selon une des revendications 1 à 19, **caractérisée** en ce que le bord de la première tubulure d'évacuation (44) qui est voisin de la roue séparatrice (52) dépasse (h) axialement légèrement du bord voisin de l'ouverture de sortie (114) de la roue séparatrice (52) qui est délimitée par la deuxième plaque frontale (96).

21. Unité de séparation selon une des revendications 1 à 20, **caractérisée** en ce que la première plaque frontale (68), les pales accélératrices (62) et une partie (58) de la cloison séparatrice (58, 78) axialement alignée avec l'ouverture d'entrée (70) de la roue séparatrice (52), ainsi qu'une partie de moyeu (56) de la roue séparatrice (52), sont formées par une première pièce moulée par injection (55) d'un seul tenant, et la partie restante de la cloison séparatrice (58, 78), ainsi que la deuxième plaque frontale (96), sont respectivement formées par une deuxième pièce injectée (78) et une troisième pièce injectée (94) distinctes, les trois pièces injectées (55, 78, 94) étant mutuellement assemblées par enclenchement ou de façon permanente, par exemple par collage ou soudage.

22. Unité d'aspiration pour un poste de travail dentaire, avec une unité de séparation pour séparer le liquide du mélange, produit en un poste de travail dentaire, d'air d'une part et de liquide ainsi qu'éventuellement en outre de particules de matières solides d'autre part, et avec un dispositif d'aspiration qui est raccordé à l'évacuation d'air de l'unité de séparation, **caractérisée** en ce que l'unité de séparation est une unité de séparation (10) selon une des revendications 1 à 21, et en ce que le dispositif d'aspiration (20) comprend une soufflante axiale, notamment une soufflante d'aspirateur.

23. Unité d'aspiration selon la revendication 22, **caractérisée** en ce que la roue de soufflante (128) du dispositif d'aspiration (20) est configurée dans le rotor (124) du moteur d'entraînement (124, 136).
